# EUROPÄISCHE PATENTSCHRIFT

(11) **EP 0 767 329 B1**
(45) Veröffentlichungstag und Bekanntmachung des Hinweises auf die Patenterteilung: **03.04.2002**
(21) Anmeldenummer: 96114761.8
(22) Anmeldetag: 14.09.1996
(51) Int. Cl.: F16J 15/08

(54) **Vorrichtung zur Abdichtung eines Ringraumes gegen Fluid**
Device for sealing an annular chamber
Dispositif d'étanchéité pour une chambre annulaire

(30) Priorität: 06.10.1995 DE 19537282
(43) Veröffentlichungstag der Anmeldung: 09.04.1997
(73) Patentinhaber: MTU Aero Engines GmbH, 80995 München (DE)
(72) Erfinder: Gröss, Helmut, 85256 Esterhofen (DE)
(74) Vertreter: Einsele, Rolf W.

(56) Entgegenhaltungen:
- DE-B- 1 253 950
- FR-A- 2 246 782
- GB-A- 2 093 537
- US-A- 3 754 766

## Beschreibung

Die Erfindung bezieht sich auf eine Vorrichtung zur Abdichtung zwischen zwei Bauteilen, insbesondere einer Turbomaschine, gegen Fluid, insbesondere Heißgas, mit einem rotationssymmetrischen, ringscheibenförmigen Dichtelement, welches einen nicht-ebenen, axial elastisch verformbaren Querschnitt aufweist.

Die DE-B- 1253 950 beschreibt einen Dichtring für die Abdichtung von Zylinderdeckeln für Brennkraftmaschinen, d.h. für Kolbenmotoren. Der rotationssymmetrische Dichtring besitzt einen nicht-ebenen, insgesamt kreisabschnittförmig gebogenen Querschnitt, der in Axialrichtung elastisch verformbar, genauer gesagt in eine flache, ebene Form komprimierbar ist. Solche Zylinder-Dichtringe liegen bekanntermaßen zwischen planparallelen, axial gering beabstandeten Oberflächen (Zylinder/Deckel) und dichten den vorhandenen Spalt in radialer Richtung statisch ab. Oberflächenungenauigkeiten und Spaltänderungen werden durch die elastische Anpassungsfähigkeit ausgeglichen. Die insgesamt unebene, gekrümmte Querschnittsform ist jedoch ungünstig in ihrer Handhabung bei Fertigung und Montage sowie bezüglich ihrer Formgenauigkeit schwer zu kontrollieren. Auch eine spiegelbildliche Anordnung mit zwei sich berührenden Ringen ist nicht ohne weiteres für eine axiale Abdichtung zwischen zwei sich radial gegenüberstehenden Teilen geeignet, wie sie häufig bei Turbomaschinen erforderlich ist.

Aufgabe der vorliegenden Erfindung ist es deshalb, eine Vorrichtung zur Abdichtung zwischen zwei Baueilen zu schaffen, die einerseits im gesamten Betriebsbereich zuverlässig dichtet und dadurch die Gefahr des Durchblasens vermeidet und die andererseits begrenzte Relativbewegungen der gegeneinander abzudichtenden Bauteile zulässt.

Erfindungsgemäß wird die gestellte Aufgabe dadurch gelöst, dass das ringscheibenförmige Dichtelement begrenzt radial und axial beweglich in mindestens einer Umfangsnut eines der beiden Bauteile geführt ist, dass es in Umfangsrichtung aus mehreren, bereichsweise ebenen Segmenten zusammengesetzt ist und die Segmente zumindest an einem ihrer beiden Umfangsränder nach beiden Axialrichtungen aufgebördelte Umfangskanten aufweisen, die jeweils unter Eigenvorspannung gegen Stirnflächen der Umfangsnut anliegen.

Die erfindungsgemäße Vorrichtung hat gegenüber vorbekannten Abdichtvorrichtungen den Vorteil, dass aufgrund der Eigenelastizität, mit der die aufgebördelten Umfangskanten gegen die Stirnflächen der Umfangsnut anliegen, eine über weite Betriebsbereiche konstante Dichtwirkung eingehalten werden kann und somit die gestellte Aufgabe hoher Fluiddichtheit einerseits und Relativbeweglichkeit andererseits gelöst werden kann.

Die aufgebördelten Umfangskanten können durch Massivumformung einer Vollringscheibe entstanden sein, deren Ränder zuerst geformt werden und die danach in Segmente geteilt wird. Vorteilhaft ist es jedoch, wenn jedes Segment aus zwei bezüglich ihres Querschnitts spiegelbildlich gegeneinander gesetzten und jeweils nur nach einer Axialrichtung aufgebördelten Einzelsegmenten aufgebaut ist. Der Fertigungsaufwand läßt sich dadurch verringern.

Obwohl bei der Verwendung von zwei spiegelbildlich gegeneinander gesetzten Einzelsegmenten diese lose aneinander anliegen können und sich so gegeneinander abstützen, sollen nach einer bevorzugten Ausführungsform der Erfindung die Einzelsegmente aneinander befestigt sein. Auf diese Weise wird eine konzentrische Positionierung der beiden Einzelsegmente garantiert und somit gleiches Federverhalten der Umfangskanten gegen die Stirnflächen der Umfangsnut. Die Einzelsegmente werden dabei bevorzugt so angeordnet, dass die Stoßfugen der gegeneinandergesetzten Einzelsegmente in Umfangsrichtung versetzt sind, um eine überlappende Abdichtung zu erzielen.

Vorzugsweise sind die Einzelsegmente, aus denen jedes Segment gebildet ist, baugleich. Die Segmente bestehen vorzugsweise aus metallischem Material, wodurch gewährleistet ist, daß über einen hohen Temperaturbereich eine eingestellte Eigenvorspannung erhalten bleibt. Die Federeigenschaft der aufgebördelten Umfangskanten kann dadurch verändert werden, daß zwischen den Einzelsegmenten eine Zwischenlage vorgesehen ist. In weiterer Ausbildung der Erfindung wird vorgeschlagen, daß bei konstantem Durchmesser der Umfangskanten die Federkennlinie der Umfangsränder durch Wahl des Bördelradius eingestellt wird. Bei einem kleineren Bördelradius ergibt sich dabei eine härtere Federkennlinie als bei einem großen Bördelradius.

Die Erfindung wird anhand der beigefügten Zeichnungen erläutert. In den Zeichnungen zeigt
- Fig. 1: einen Teillängsschnitt aus einer Turbomaschine mit zwei einen Ringraum ausbildenden Rotationsbauteilen, wobei der Ringraum durch eine erfindungsgemäße Abdichtvorrichtung abgedichtet ist,
- Fig. 2: eine Anordnung nach Fig. 1 verkleinert, mit einer weiteren Ausführungsform einer Abdichtvorrichtung und
- Fig. 3: die Anordnung gemäß Fig. 1 mit einem Dichtelement, dessen Einzelsegmente einen gegenüber Fig. 1 unterschiedlichen Bördelradius r aufweisen.
- Fig. 4a, b: den Ausschnitt IV aus Fig. 3 mit unterschiedlichen Profilen der Umfangsnut 11.

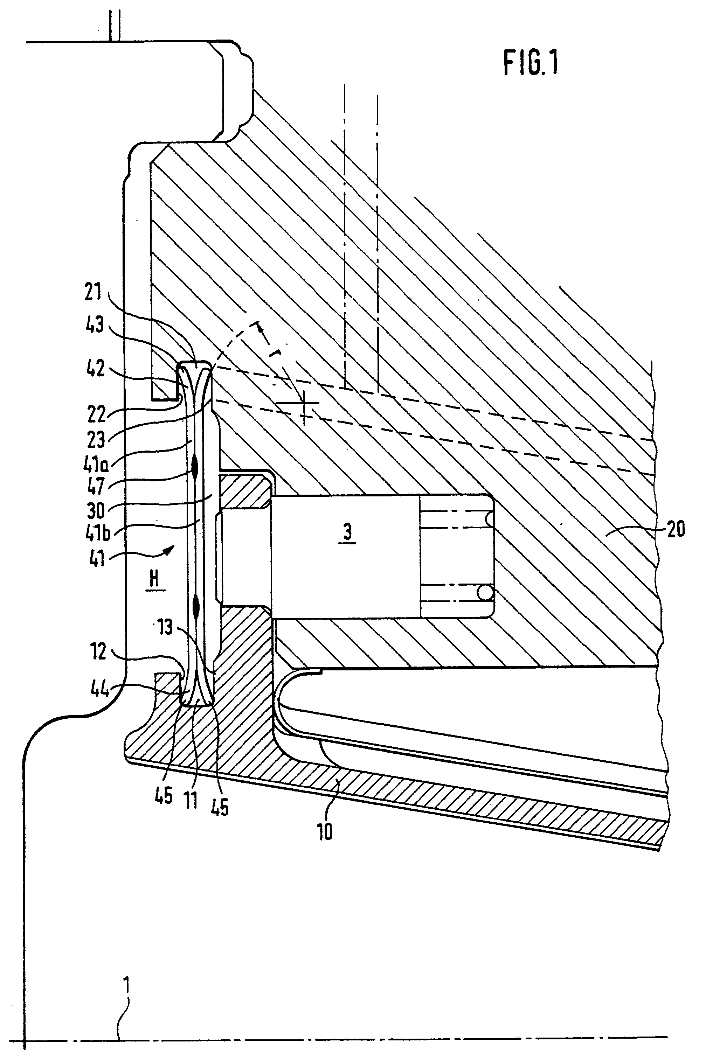

Der in Fig. 1 gezeigte Längsschnitt ist ein Ausschnitt aus einer Turbomaschine, deren Hauptrotationsachse mit 1 bezeichnet ist. Ein bezüglich der Rotationsachse 1 rotationssymmetrischer Dichtungsträger 10 ist in einem rotationssymmetrischen gehäuseseitigen Bauteil 20 über Federbolzen 3 gehalten. Die Bauteile 10 und 20 bilden einen Ringraum 30 aus, der gegenüber einem Heißgasraum H abzudichten ist, wobei radiale und axiale begrenzte Beweglichkeit zwischen den Bauteilen 10 und 20 zulässig sein müssen. Es ist ein scheibenförmiges aus Segmenten 41 gebildetes Dichtelement vorgesehen, welches radial innen in eine Umfangsnut 11 des Bauteils 10 eingreift, radial außen in eine Umfangsnut 21 des Bauteils 20. Die Mindestanzahl der Segmente 41 für ein Dichtelement ist 2, wobei es sich dann um zwei Halbkreissegmente handelt; es können jedoch auch mehrere durch regelmäßige Teilung eines Rings entstandene Segmente 41 vorgesehen sein. Jedes Segment 41 besteht aus zwei Einzelsegmenten 41a und 41b, die spiegelbildlich gegeneinandergesetzt sind und jeweils nach einer Axialrichtung aufgebördelte Umfangskanten 43, 45 aufweisen. Im gezeigten Ausführungsbeispiel nach Fig. 1 sind sowohl der innere Umfangsrand 44 als auch der äußere Umfangsrand 42 jeweils mit aufgebördelten Umfangskanten 45 bzw. 43 versehen. Es ist jedoch denkbar, daß ein Segment 41 am inneren oder äußeren Umfang fest eingebaut ist und nur jeweils am anderen Umfangsrand mit den aufgebördelten Umfangskanten versehen ist. Die aufgebördelten Umfangskanten 43, 45 liegen unter Eigenvorspannung gegen Stirnflächen 22, 23 der äußeren Umfangsnut 21 bzw. gegen Stirnflächen 12, 13 der inneren Umfangsnut 11 an. Auf diese Weise werden zwischen dem Heißgasraum H und dem abzudichtenden Ringraum 30 jeweils zwei hintereinander liegende ringförmige Dichtlinien zwischen dem Dichtelement und den Bauteilen 10 bzw. 20 geschaffen. Aufgrund der elastischen Ausbildung des Dichtelements und der Eigenvorspannung der aufgebördelten Umfangskanten kann das eingestellte Spiel an den Dichtlinien auch bei begrenzter Relativbewegung der Bauteile 10, 20 gegeneinander sowohl in Axial- als auch in Radialrichtung eingehalten werden.

Im gezeigten Ausführungsbeispiel nach Fig. 1 sind die Einzelsegmente 41a, 41b baugleich ausgebildet und mittels einer Lötung (Lotpunkte 47) aneinander befestigt. Alternativ könnte eine Schweißung oder andere Fügung vorgenommen sein oder es könnte eine Befestigung der Einzelsegment 41a, 41b unterbleiben.

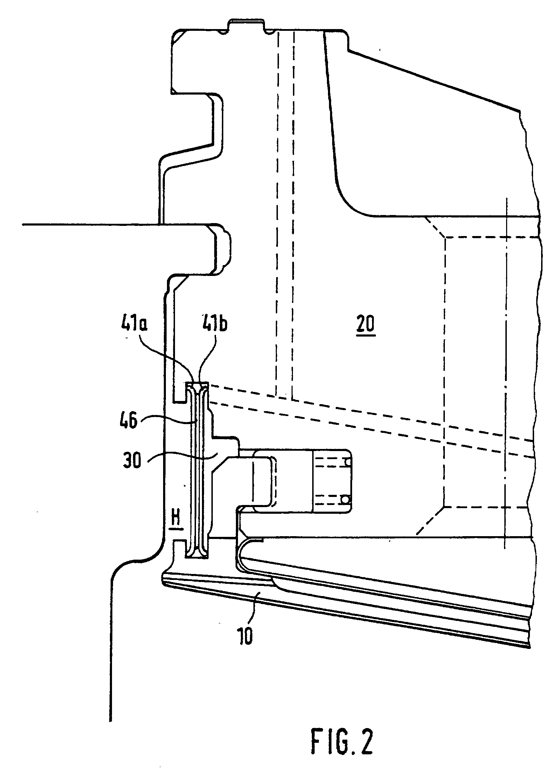

Bei dem in Fig. 2 gezeigten Ausführungsbeispiel sind gleiche Bauteile mit denselben Bezugszeichen bezeichnet wie in Fig. 1. Unterschiedlich zur Ausführungsform nach Fig. 1 ist der Aufbau des Dichtelements, indem zwischen die Einzelsegmente 41a, 41b eine Zwischenlage 46 eingesetzt ist. Die Einfügung der Zwischenlage kann sowohl fertigungstechnische Vorteile bieten als auch eine Variation der Federsteife der jeweiligen Bördelränder herbeiführen.

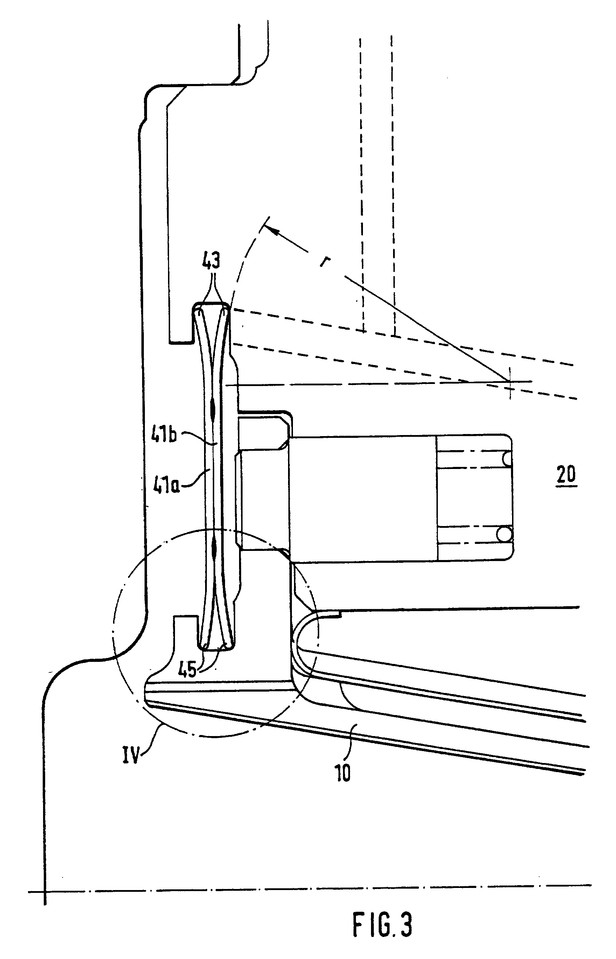

Die Ausführungsform gemäß Fig. 3 gleicht weitgehend der Ausführungsform nach Fig. 1. Lediglich ist der Bördelradius r der Einzelsegmente 41 a, 41b bei der Ausführungsform nach Fig. 3 größer gewählt als bei der Ausführungsform nach Fig. 1. Bei sonst gleicher Ausführung der Einzelsegmente bzw. des Dichtelements ergibt sich durch den größeren Bördelradius eine weichere Federcharakteristik der aufgebördelten Umfangskanten 43, 45.

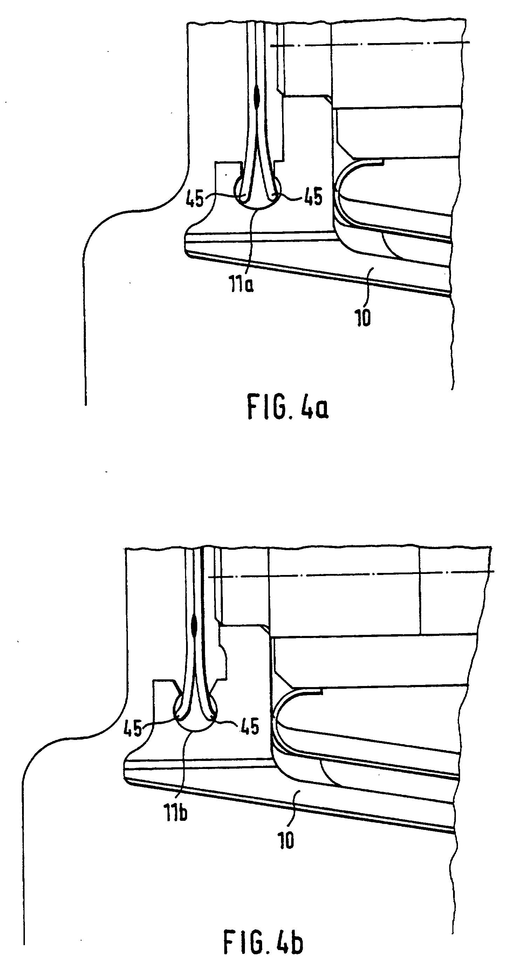

Der in Fig. 4a dargestellte Ausschnitt aus Fig. 3 zeigt eine alternative Querschnittsform der Umfangsnut, die hier mit 11a bezeichnet ist. Durch die Hinterschneidung wird eine Sicherung der Einzelsegmente erreicht. Die konische Auschildung der Nutwangen bei der Umfangsnut 11b gemäß Fig. 4b erleichtert die Montage der Einzelsegmente.

## Patentansprüche

1. Vorrichtung zur Abdichtung zwischen zwei Bauteilen (10, 20), insbesondere einer Turbomaschine, gegen Fluid, insbesondere Heißgas, mit einem rotationssymmetrischen, ringscheibenförmigen Dichtelement, welches einen nichtebenen, axial elastisch verformbaren Querschnitt aufweist, **dadurch gekennzeichnet, dass** das Dichtelement entweder begrenzt radial und axial beweglich in je einer Umfangsnut (11, 21) jedes der beiden Bauteile (10, 20) geführt ist oder begrenzt beweglich in einer Umfangsnut eines Bauteils geführt und an dem anderen Bauteil fest angeordnet ist, dass das Dichtelement in Umfangsrichtung aus mehreren, bereichsweise ebenen Segmenten (41) zusammengesetzt ist und die Segmente (41) zumindest an einem ihrer beiden Umfangsränder (42, 44) nach beiden Axialrichtungen aufgebördelte Umfangskanten (43, 45) aufweisen, die jeweils unter Eigenvorspannung an Stirnflächen (12, 13, 22, 23) der Umfangsnut (11, 21) anliegen.

2. Vorrichtung nach Anspruch 1, **dadurch gekennzeichnet, dass** jedes Segment (41) aus zwei bezüglich ihres Querschnitts spiegelbildlich gegeneinander gesetzten und jeweils nur nach einer Axialrichtung aufgebördelten Einzelsegmenten (41a, b) aufgebaut ist.

3. Vorrichtung nach Anspruch 2, **dadurch gekennzeichnet, dass** die Einzelsegmente (41a, b) aneinander befestigt sind.

4. Vorrichtung nach Anspruch 2 oder 3, **dadurch gekennzeichnet, dass** die Einzelsegmente (41a, b) baugleich sind.

5. Vorrichtung nach den Ansprüchen 2 bis 4, **dadurch gekennzeichnet, dass** die Einzelsegmente (41a, b) jedes Segments (41) in Umfangsrichtung gegeneinander versetzt sind, so daß eine überlappende Abdichtung der Segmente (41) gegeben ist.

6. Vorrichtung nach den Ansprüchen 1 bis 5, **dadurch gekennzeichnet, dass** die Segmente (41) aus metallischem Material bestehen.

7. Vorrichtung nach den Ansprüchen 2 bis 6, **dadurch gekennzeichnet, dass** zwischen den Einzelsegmenten (41a, b) eine Zwischenlage (46) vorgesehen ist.

8. Vorrichtung nach den Ansprüchen 1 bis 7, **dadurch gekennzeichnet, dass** bei konstantem Durchmesser der Umfangskanten (43, 45) die Federkennlinie der Umfangsränder (42, 44) durch Wahl des Bördelradius (r) eingestellt wird.

## Claims

1. Device for providing a seal against a fluid, in particular hot gas, between two components (10, 20), of a turbo-engine in particular, with a rotationally symmetrical annular disc-shaped sealing element having a non-planar cross section elastically deformable in an axial direction, **characterised in that** the sealing element is either guided in a limited radial and axial displacement in a respective circumferential groove (11, 21) in each of the two components (10, 20) or is arranged so as to be guided in a limited displacement in a circumferential groove of one component and permanently joined to the other component, the sealing element being made up of several segments (41) that are flat in certain regions, and the segments (41) have peripheral edges (43, 45) which are flared in both axial directions at least at one of their two peripheral edges (43, 45) and which are respectively naturally biassed so as to sit on end faces (12, 13, 22, 23) of the circumferential groove (11, 21).

2. Device as claimed in claim 1, **characterised in that** each segment (41) is made up of two individual segments (41 a, b) placed one against the other so that their cross sections are disposed in mirror image and each being flared in only one axial direction.

3. Device as claimed in claim 2, **characterised in that** the individual segments (41a, b) are secured to one another.

4. Device as claimed in claim 2 or 3, **characterised in that** the individual segments (41a, b) are of identical construction.

5. Device as claimed in claims 2 to 4, **characterised in that** the individual segments (41a, b) of each segment (41) are offset from one another in a circumferential direction so that the segments (41) provide an overlapping seal.

6. Device as claimed in claims 1 to 5, **characterised in that** the segments (41) are made from a metallic material.

7. Device as claimed in claims 2 to 6, **characterised in that** an intermediate layer (46) is provided between the individual segments (41a, b).

8. Device as claimed in claims 1 to 7, **characterised in that** the spring characteristic curve of the peripheral edges (43, 45) is adjusted for a constant diameter of the peripheries (42, 44) by selecting the flare radius (r).

## Revendications

1. Dispositif pour réaliser une étanchéité entre deux composants (10, 20), en particulier pour une machine à turbine, par rapport à un fluide, en particulier du gaz chaud, avec un élément d'étanchéité en symétrie de rotation en forme disque annulaire, qui possède une section non plane pouvant faire l'objet d'une déformation élastique dans le sens axial, **caractérisé en ce que** l'élément d'étanchéité est soit guidé avec une mobilité radiale et axiale limitée dans respectivement une rainure périphérique (11, 21) de chacun des deux composants (10, 20), soit guidé avec une mobilité réduite dans une rainure périphérique de l'un des composants et disposé de manière fixe sur l'autre composant, **en ce qu'**en direction périphérique l'élément d'étanchéité se compose de plusieurs segments (41), qui sont planes par zones et **en ce que** les segments (41) comprennent au moins sur l'un de leurs deux bords périphériques (42, 44) des arêtes périphériques (43, 45) recourbées dans les deux directions axiales et qui s'appuient respectivement par une précontrainte propre sur des surfaces frontales (12, 13, 22, 23) de la rainure périphérique (11, 21).

2. Dispositif selon la revendication 1, **caractérisé en ce que** chaque segment (41) est constitué de deux segments individuels (41a, b), qui, en ce qui concerne leurs profils, sont placées en opposition symétrique par réflexion et ne sont respectivement recourbés que dans une seule direction axiale.

3. Dispositif selon la revendication 2, **caractérisé en ce que** les segments individuels (41a, b) sont fixés l'un à l'autre.

4. Dispositif selon la revendication 2 ou 3, **caractérisé en ce que** les segments individuels (41a, b) sont de même conception.

5. Dispositif selon les revendications 2 à 4, **caractérisé en ce que** les segments individuels (41a, b) de chaque segment (41) sont décalés l'un par rapport à l'autre dans la direction périphérique, une étanchéité par chevauchement des segments (41) étant ainsi assurée.

6. Dispositif selon les revendications 1 à 5, **caractérisé en ce que** les segments (41) se composent de matériau métallique.

7. Dispositif selon les revendications 2 à 6, **caractérisé en ce qu'**une couche intermédiaire (46) est prévue entre les segments individuels (41a, b).

8. Dispositif selon les revendications 1 à 7, **caractérisé en ce qu'**avec un diamètre constant des arêtes périphériques (43, 45), la courbe caractéristique de ressort des bords périphériques (42, 44) est déterminée par choix du rayon de courbure (r).
